Europäisches Patentamt

European Patent Office

Office européen des brevets

(11) Publication number: **0 024 407**
**B1**

# EUROPEAN PATENT SPECIFICATION

(45) Date of publication of patent specification: **24.10.84**

(21) Application number: **80900435.1**

(22) Date of filing: **06.03.80**

(86) International application number:
**PCT/GB80/00041**

(87) International publication number:
**WO 80/01970 18.09.80 Gazette 80/21**

(51) Int. Cl.³: **H 01 M 10/34, H 01 M 10/06, H 01 M 4/68**

(54) **LEAD ACID ELECTRIC STORAGE BATTERIES.**

(30) Priority: **07.03.79 GB 7908035**
**09.05.79 GB 7916121**
**02.11.79 GB 7938072**

(43) Date of publication of application:
**11.03.81 Bulletin 81/10**

(45) Publication of the grant of the patent:
**24.10.84 Bulletin 84/43**

(84) Designated Contracting States:
**DE FR NL**

(56) References cited:
**AU-A- 407 845**
**DE-A-1 943 183**
**FR-A-1 084 013**
**FR-A-2 290 048**
**GB-A-1 032 852**
**GB-A-1 364 283**
**US-A-3 801 310**
**US-A-3 879 217**
**US-A-4 158 563**

**Derwent Japanese Patents Reports, volume 74, no. 27 issued 8th August 1974 (London, GB), see the abstract J7-4025575, Japan Storage Battery**

(73) Proprietor: **CHLORIDE GROUP PUBLIC LIMITED COMPANY**
**52 Grosvenor Gardens**
**London SW1W 0AU (GB)**

(72) Inventor: **PETERS, Kenneth**
**"Glenbank", Broad Oak Park**
**Worsley, Lancashire (GB)**

(74) Representative: **Kearney, Kevin David Nicholas et al**
**KILBURN & STRODE 30 John Street**
**London, WC1N 2DD (GB)**

(56) References cited:

**Chemical Abstracts, vol. 83, issued 1975 (Columbus, Ohio, U.S.A.), Kawase, Tetsunari et al., "Lead storage battery", see page 215, abstract no. 134945j, JP, A, 7512537 Matsushita Electric Industrial Co., Ltd., 8 février 1975**
**Chemical Abstracts, vol. 83, issued 1975 (Columbus, Ohio, U.S.A.), Kawase, Tetsunari et al., "Lead storage battery", see page 216, abstract no. 134946k, JP, A, 7512539, Matsushita Electric Industrial Co., Ltd., 8 février 1975**

Courier Press, Leamington Spa, England.

## Description

### Technical field

The present invention relates to lead acid electric storage batteries, and is particularly concerned with such batteries of sealed or recombinant type in which the gas evolved during operation or charging is induced to recombine within the battery at the battery electrodes.

### Background art

We have attempted to make recombinant lead acid batteries with flat plates such as miner's cap lamp batteries using pure lead electrode support or grids and we find that there are considerable problems in handling and pasting pure lead electrodes to produce a prismatic battery because of its softness. Because of the difficulty of casting pure lead one cannot overcome these strength problems by casting grids with reinforcing frames. In addition, pure lead suffers from unacceptable growth in use, and problems on charge/discharge cycling.

We have also tried using calcium containing lead alloys, since these alloys can be more readily cast and being substantially harder than pure lead, the grids can more readily be pasted and made into prismatic batteries.

Our French Patent Specification No. 2290048 discloses a sealed lead acid battery designed so that oxygen produced on overcharge recombines on the surface of the negative electrodes excess negative capacity being provided to ensure that this can occur.

Absorbent polyester separator material having fibre diameters of 5 to 50 microns ($\mu$m), e.g. about 17 microns ($\mu$m) with gas channels impressed thereon is provided together with a restricted amount of electrolyte so that whilst the amount of electrolyte (E) is taught desirably to exceed the pore volume (X) of the separators plus the pore volume (Y) of the positive and negative electrodes it must not exceed 2X+Y.

However, as was the accepted attitude prior to the present invention, our French Patent taught that the electrodes should have metallic supports which minimize the evolution of hydrogen and specifically taught the use of lead-calcium or lead-calcium-tin electrodes in preference to pure lead electrodes.

However, we have found that batteries using alloys containing calcium are difficult to produce to a repeatable precise performance specification and in addition also suffer from problems on charge/discharge cycling.

We have found that, surprisingly, the inclusion of antimony in a recombinant battery does not have the disastrous effect on its performance, which would be expected in view of the widespread knowledge in the battery industry over many years and set out in text books on batteries that antimony is liable to cause unacceptable levels of gassing if it is present in the grids or the electrolyte of a lead acid battery, and which is corroborated by many separate studies.

High levels of gassing would result in unacceptably high losses of water in batteries described as maintenance free.

One attempt to deal with this problem of gassing in so-called maintenance free batteries which are designed to require no topping up during their life but which are not sealed and do not operate in a recombinant manner is shown in Japanese A 7512537 Chem. Abs. 134945j in Chem. Abs. Vol. 83 (1975) p. 215.

This maintenance free battery has lead antimony alloy cathodes containing 1—3% antimony and 0.5 to 1% arsenic and lead-calcium anodes containing 0.06 to 0.1% calcium, and small pore diameter separator material of average pore diameter 1 to 8 microns ($\mu$m).

This patent makes the same assumptions about the dangers of antimony on gassing and contends that water loss is reduced by the separator capturing antimony dissolved in the electrolyte and preventing it depositing on the anode. It quotes a water loss of 197 ml as against 275 ml for an identical battery with a separator having an average pore diameter of 20—30 microns ($\mu$m) used under identical conditions. Whilst this is a reduction in water loss it is still substantial and would not change the system with the larger pore diameter from being maintenance free to being recombinant. Such a method does not conceive of the anode containing antimony.

The text books and the patents referred to above teach the antimony and arsenic both depress the hydrogen over potential at the negative plate thus causing gassing. Patents heretofore on recombinant lead acid batteries have taught that impurities which depress the hydrogen overvoltage of lead should be substantially avoided (G.B. 1364283) and that antimony and arsenic specifically should be avoided (G.B. 1032852), or that special, complicated and expensive steps should be taken.

Thus Australian Patent No. 407845 is alledged to be concerned with recombinant lead acid batteries and utilizes a thin microporous sheet separator in combination with a porous glass fibre retainer mat. It recognizes and endorses the conventionally held view that antimony must be avoided in a recombinant lead acid battery because of its effect on hydrogen over potential and the deleterious effect it is expected to have on recombinant operation. It recognizes the problems associated with the use of pure lead or lead calcium alloys and advocates the use of pure lead plating of conventional antimonial alloy grids.

This Australian patent contends that lead plating is simple but the process will require individual electrodes to be produced and then to be plated in a separate manufacturing stage which itself will involve a number of steps.

Disclosure of the invention

We have also found that the separator characteristics defined herein and shown in the photomicrographs accompanying this specification are most desirable in a recombinant battery since it is believed that they not only ensure good electrolytic conductivity but also permit rapid transport of oxygen from the positive to the negative electrodes through the open gas phase volume between the fibres on which the electrolyte is believed to cohere in view of the separator's observed high wicking or capillary activity.

Thus we have found that using the type of separator described herein we can use antimonial lead alloys as defined herein in recombinant batteries and avoid the problems associated with pure lead and lead alloys containing calcium whilst achieving excellent gas recombination, cycle life and operating capabilities with a range of battery types including automotive batteries, aircraft batteries and electric storage batteries suitable for providing, in body portable form, the power need of an individual, for example to power a miner's cap lamp.

The invention will be described with particular reference to miner's cap-lamp batteries but is not limited in its applicability to such batteries.

Moreover, the invention, although described with reference to batteries, is not restricted to batteries but is also applicable to single cells e.g. spirally wound cells, and the claims to batteries thus include single cells within their scope.

According to one aspect of the present invention there is provided a recombinant lead acid electric storage battery in which the electrodes in each cell have current conducting elements made from lead alloy, the positive and negative electrodes being arranged so that the capacity of the negative electrodes is at least as great as the capacity of the positive electrodes, the positive and negative electrodes being separated by separators of electrolyte and gas permeable electrolyte absorbent compressible fibrous material, the said separators being compressed between the said electrodes and the battery containing aqueous sulphuric acid electrolyte absorbed in the electrodes and in the separator material, the battery at least when fully charged having substantially no free unabsorbed electrolyte, each cell being in communication with non-return gas venting means, the arrangement being such that sufficient oxygen gas recombination occurs in the battery at charging rates not in excess of $C_{20}$ to achieve recombinant operation of the battery, characterised in that the current conducting elements of at least one of the electrode groups are made from an antimonial lead alloy containing from 1.0% to 6% antimony.

The antimonial alloy desirably contains up to 6% by weight e.g. 1% to 4% by weight, since the latter range achieves gas recombination whilst economising on expensive antimony. In addition in comparison with lower antimony content alloys the material can be more readily cast and is more resistant to grid growth.

Whilst the antimony content can be as low as 1% it is preferably in excess of this in order to achieve good hardness and pastability within reasonable periods after casting. In addition whilst the antimony content may be as high as 3% it is preferably less than 3% so as to keep the tendency of the plates to gas to a relatively low level as compared with the gassing tendency observed in flooded systems for such higher antimony contents. Thus a preferred range is 1.01% to 2.99% e.g. 1.1 to 2.9 or 1.2 to 2.8% antimony.

Preferably the current conducting elements of only the positive electrodes are made from a lead antimony alloy and the negative is a lead-calcium-tin alloy or a lead-calcium alloy, or pure lead though this material being soft can introduce problems in the assembly of the battery and high grid growth.

Another preferred antimonial alloy for use in the present invention contains 2.3 to 2.8% antimony, 0 to 0.5% by weight arsenic e.g. 0.2 to 0.49% or 0.25 to 0.4% arsenic, 0 to 0.1% by weight copper e.g. 0.02 to 0.05% copper, 0 to 0.5% by weight tin e.g. 0.02 to 0.4% tin and 0 to 0.5% by weight selenium e.g. 0.001% to 0.5% selenium and a particularly preferred alloy composition for the current conductors of the plates is 2.3 to 2.8% by weight antimony, 0.25 to 0.35% by weight arsenic, 0.10 to 0.14% by weight tin, 0.02 to 0.05% by weight copper, 0.002% to 0.05% by weight selenium, balance substantially lead.

The charging rate is desirably kept at not greater than $C_{15}$ and preferably less than $C_{20}$ e.g. $C_{20}$ to $C_{60}$.

The volume of electrolyte is desirably in the range 0.8 (X+Y) to 0.99 (X+Y) and especially at least 0.9 (X+Y) or even at least 0.95 (X+Y). These values enable the active material to be utilized more efficiently than when lower amounts of electrolyte are used.

It has also been found that recombination can still occur at the negative electrodes at these very high levels of saturation of the pores which is contrary to what is conventional in recombinant sealed lead acid cells.

The ratio of X to Y may be in the range 6:1 to 1:1 e.g. 5.5:1 to 1.5:1 or more preferably 4:1 to 1.5:1.

The electrolyte active material ratio is at least 0.05 e.g. at least 0.06 or at least 0.10 and is the ratio of $H_2SO_4$ in grams to the lead in the active material on the positive and negative electrodes calculated as grams of lead.

It is preferably in the range 0.10 to 0.60 especially 0.11 to 0.55 e.g. 0.20 to 0.50.

The ratio of negative to positive active material (on a weight of lead basis) may be in the range 0.5:1 to 1.5:1 e.g. 0.6:1 to 1.4:1. The use of ratios below 1:1 is contrary to what is taught in GB 1364283 but we find that recombinant operation can be achieved at these ratios and they have the advantage of providing more positive active material for the same cell volume. We thus prefer to use ratios in the range 0.6:1 to 0.99:1 e.g. 0.7:1 to 0.9:1.

As mentioned above the separator material is a compressible absorbent fibrous material e.g. having an electrolyte absorption ratio of at least 100% e.g. 100 to 200% especially 110 to 170%. It is electrically non-conducting and electrolyte-resistant.

Electrolyte absorption ratio is the ratio, as a percentage, of the volume of electrolyte absorbed by the wetted portion of the separator material to the dry volume of that portion of the separator material which is wetted, when a strip of the dry separator material is suspended vertically above a body of aqueous sulphuric acid electrolyte of 1.270 SG containing 0.01% by weight sodium lauryl sulphonate with 1 cm of the lower end of the strip immersed in the electrolyte after a steady state wicking condition has been reached at 20°C at a relative humidity of less than 50%.

The thickness of the separator material is measured with a micrometer at a loading of 10 kilopascal (1.45 psi) and a foot area of 200 square millimetres (in accordance with the method of British standard specification No. 3983). Thus the dry volume of the test sample is measured by multiplying the width and length of the sample by its thickness measured as described.

We also prefer that the separator material should have a wicking height of at least 5 cm on the above test, namely that the electrolyte should have risen to a height of at least 5 cm above the surface of the electrolyte into which the strip of separator material dips when the steady state condition has been reached, so that good electrolyte distribution is achieved in each cell.

We find that these two requirements are met by fibrous blotting paper-like materials made from fibres having diameters in the range 0.01 microns ($\mu$m) or less up to 10 microns ($\mu$m), the average of the diameters of the fibres being less than 10 microns ($\mu$m), and preferably less than 5 microns, the weight to fibre density ratio, namely the ratio of the weight of the fibrous material in grams/square metre to the density in grams/cubic centimetre of the material from which the individual fibres are made preferably being at least 20 preferably at least 30 and especially at least 50.

This combination of properties gives a material which is highly resistant to "treeing through", namely growth of lead dendrites from the positive electrode in a cell to the negative electrode producing short circuits, whilst at the same time even when containing large amounts of absorbed electrolyte, still providing a substantial degree of gas transmission capability.

Recombinant lead acid batteries, in which gas recombination is used to eliminate maintenance during use, operate under superatmospheric pressure e.g. from 1 bar (atmospheric pressure) upwards and due to the restricted amount of electrolyte, the high electrolyte absorption ratio of the separator, and the higher electrochemical efficiency of the negative electrode, the battery operates under the so-called "oxygen cycle". Thus oxygen generated, during charging or overcharging, at the positive is transported, it is believed, through the gas phase in the separator to the surface of the negative which is damp with sulphuric acid and there recombines with the lead to form lead oxide which is converted to lead sulphate by the sulphuric acid. Loss of water is thus avoided as is excess gas pressure inside the battery.

The higher electrochemical efficiency of the negative active material enables the negative electrode to effect recombination of the oxygen produced by the positive electrode even at the beginning of the charge cycle. Thus it may not be necessary to have an excess weight of negative active material compared to the positive active material.

However recombinant operation of the battery may be facilitated by the use of a number of features in combination.

Thus firstly one desirably provides that, under the charge and discharge conditions, under which the battery is designed to operate, the capacity of the negative electrodes in each cell will normally and desirably always be in excess of that of the positive electrodes.

The electrochemical efficiency of the negative electrodes is in general greater than that of the positive electrodes but it must be born in mind that the efficiency of the negative electrode drops more rapdily than that of the positive electrodes both as the cells undergo increasing numbers of cycles of charge and discharge and as the temperature of operation is reduced below ambient (i.e. 25°C). Excess negative capacity may thus conveniently be ensured by providing an excess of negative active material (calculated as lead) compared to the positive active material in each cell.

Secondly one provides a restricted amount of electrolyte as described above and thirdly one provides a separator desirably having a high electrolyte absorption ratio as also described and defined above, which is compressible, so as to conform closely to the surfaces of the electrodes, and which has wicking or capillary activity, whereby transmission of electrolyte and electrolytic conduction between the electrodes is facilitated and preserved independent of the orientation of the cell, whilst gas transmission through the open spaces in the separator is maintained so that adequate and rapid gas transmission between the electrodes is also ensured.

Use of a fibrous separator having very small fibre diameters ensures that the open spaces in the separator are highly tortuous thus fulfilling the requirement that the separator resist "treeing through" as described above.

If the charging conditions generate oxygen at a faster rate than it can be transported to the negative and react thereat, then the excess oxygen is vented from the battery. The container of the battery is thus provided with gas venting means. The gas venting means taking the form of a non-return valve ensure that air cannot obtain access to the interior of the battery although excess gas generated therein can escape to atmosphere.

The lid of the container may be formed with filling apertures to permit electrolyte to be introduced into each cell. The filling apertures may be closed after the electrolyte has been added but the closures should provide gas venting means or separate gas venting means should be provided.

Best mode of carrying out the invention

Further features and details of the invention will be apparent from the following description of various specific constructions of lead acid electric storage cells and batteries embodying the present invention which are given by way of example only with reference to the accompanying drawings in which:—

Figure 1 is a scrap perspective cut-away view of an experimental recombinant lead acid electric storage cell embodying the invention,

Figure 2 is a scrap cross sectional view on the line II—II of Figure 1 showing the gas vent,

Figure 3 is a scrap cross sectional view on the line III—III of Figure 1 showing the way in which the group bar and terminal post are sealed into the lid.

Figure 4 is a partly cut-away perspective view of a battery designed for use as a miner's cap lamp battery,

Figure 5 is an electron scanning photomicrograph of a preferred separator material at 1000 fold magnification, and

Figure 6 is a view similar to Figure 5 at 4000 fold magnification.

Example 1

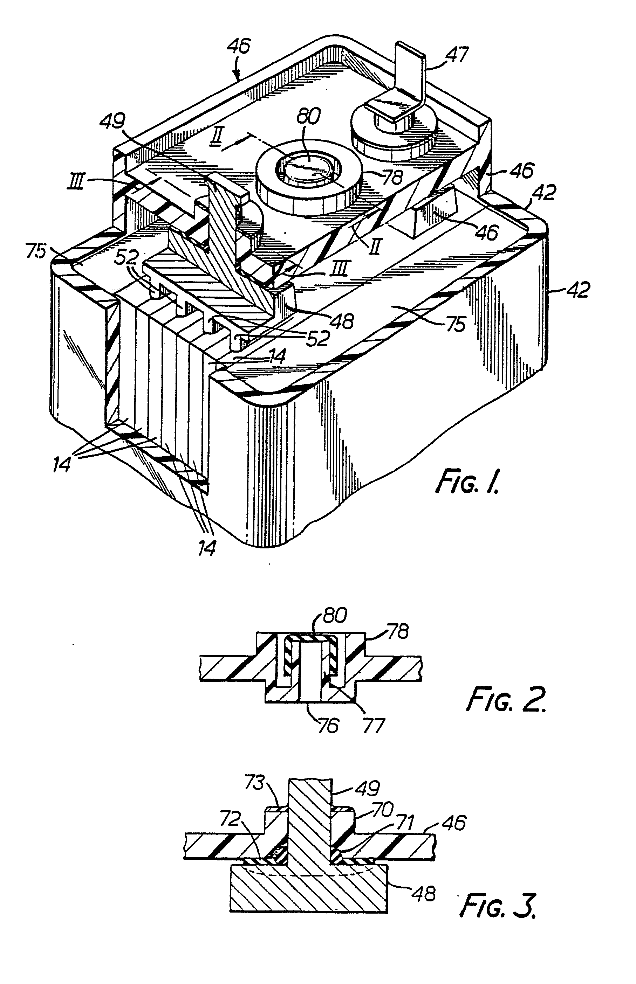

The cell shown in Figure 1 has a capacity of 5 Ah and is accommodated in a container 42 made as a single moulding of a polypropylene plastics material. The cell is sealed by a lid 46 which is connected to the walls of the container 42 by the method known as "heat sealing" in which the edges to be joined are placed in contact with opposite surfaces of a heated tool which is subsequently withdrawn and the partially melted edges are pressed together.

The cell contains three positive plates 50 (which are not shown since they are hidden by the separator) interleaved with four negative plates 52 (which are normally also hidden by the separator). The plates are separated from one another by separators 14 of electrolyte and gas permeable compressible blotting paper-like glass fibre material whose composition and function will be described below. A separator 14 is also placed on both outside faces of the cell. There are thus eight sheets of separator in each cell. The positive plates 50 and negative plates 52 are both 1.4 mm thick, 4.3 cms wide and 8.5 cm high and are each formed from a current conducting element which is a cast grid of lead alloy and carry positive and negative active electrode material respectively and each grid weighs 15.0 grams.

The grid alloy composition in % by weight is 2.43% antimony, 0.22% arsenic, 0.04% tin, 0.006 copper, 0.004% selenium, balance lead.

The positive active material had the following composition before being electrolytically formed: grey oxide 1080 parts, fibre 0.45 parts, water 142 parts, 1.40 SG aqueous sulfuric acid 60 parts. The paste had a density of 4.2 g/cm³ and a lead content of 79%. Each positive plate carried 18.5 grams of active material on a dry weight basis.

The negative active material had the following composition before being electrolytically formed: grey oxide 1080 parts, fibre 0.225 parts, barium sulphate 5.4 parts, carbon black 1.8 parts, stearic acid 0.54 parts, Vanisperse CB (a lignosulphonate) 3.27 parts, water 120 parts, 1.40 SG aqueous sulphuric acid 70 parts. The paste had a density of 4.3 g/cm³ and contained 79% lead. Each negative plate carried 16.0 grams of active material on a dry weight basis.

Vanisperse CB is described in British patent specification No. 1,396,308.

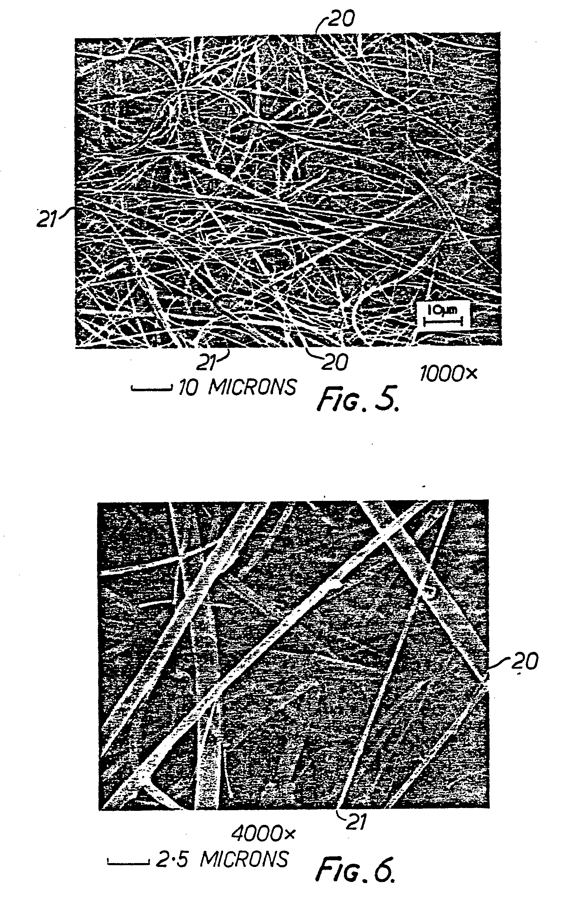

The separators 14 are of highly absorbent blotting paper-like short staple fibre glass matting about 2 mm thick, there being fibres 61 as thin as 0.2 microns and fibres 60 as thick as 2 microns in diameter, the average of the diameter of the fibres being about 0.5 microns. Figures 5 and 6 show the material at different magnifications, Figure 5 at 1000 fold and Figure 6 at 4000 fold.

It will be observed that the material whilst highly adsorbent still has a very large amount of open space between the individual fibres. When tested for its wicking and electrolyte absorption capabilities as described above it was found that the liquid had wicked up to a height of 20 cm after 2 hours and this is the steady state condition. This 20 cm of material absorbs 113% of its own dry volume of electrolyte, and this is its electrolyte absorption ratio.

The separator 14 weighs 280 grams/square metre and has a porosity of 90—95% as measured by mercury intrusion penetrometry. The density of the glass from which the fibres of the separator are made is 2.69 gr/cc; the weight to fibre density ratio is this 100.

Each sheet of separator material is 2 mms thick, 5.3 cm wide and 9 cm high and weighs 280 gram/square metre. The total volume of separator for each cell before assembly in the cell is 76 cubic centimetres. The separator in the cell is compressed by about 10% and thus the volume of separator in the cell is 68.7 cubic centimetres. Since the porosity is 90—95% the separator void volume is 61—65 cm³ (this is the value of X). The weight of separator present in the cell is 10.7 grams.

The separators being compressible conform closely to the surfaces of the plates thus facilitating electrolyte transfer and ionic conduction between the plates via the separator.

The total thickness of each separator should desirably be no thinner than about 0.6 mm since below this value we have found that growth of dendrites through the separator is liable to occur with the material shown in Figures 5 and 6. It may be as high as 3 or more even 4 mm but a preferred range is 1.5 to 2.5 mm. The separator weight to fibre density ratio is preferably 90 to 120.

The total geometric surface area of the positive plates in each cell is 219 square centimetres and of the negative plates 292 square centimetres. The dry weight of active material of the positive plates is $55.5 \times 1.07$ i.e. 59.4 grams (as $PbO_2$ i.e. 51.4 grams as lead) and that of the negatives is $64 \times 0.93 = 59.5$ grams (as lead) a very slight excess of negative active material is based on the weight of the positive active material (15% as lead) or a ratio of negative to positive active material (on a lead weight basis) of 1.15:1. The total weight of the grids is 105 grams.

The true density of the positive active material ($PbO_2$) in the fully charged state is 9 g/cm³ and the true dry density of the negative active material (sponge lead) in the fully charged state is 10.5 g/cm³. Thus the true volume of the positive active material is $55.5 \div 9$ i.e. 6.2 cm³ and the true volume of the negative active material is $64 \div 10.5$ i.e. 6.1 cm³.

The apparent density of the dry positive active material is 4.2 g/cm³ and thus the apparent volume of the dry positive active material is $55.5 \div 4.2$ i.e. 13.2 cm³. The apparent density of the dry negative active material is 4.4 g/cm³ and thus the apparent volume of the dry negative active material is $64 \div 4.4$ i.e. 14.5 cm³. Thus the pore volume of the positive active material is 7.0 cm³ and of the negative active material is 8.4 cm³ and the total pore volume of the active material is 8.4 cm³ and the total pore volume of the active material is 15.4 cm³, which is the value of Y. The ratio of X to Y is thus 4.1:1 to 4.2:1. (X+Y) is 76.4 to 80.4.

As the active material has sulphuric acid added to it its porosity decreases. When the active material is charged its porosity increases and in the fully charged condition is about the same as it is in the unformed state before addition of electrolyte.

The calculated true surface area for the positive active material is $55.5 \times 2.5$ i.e. 138.7 square metres and for the negative is $64 \times 0.45$ i.e. 28.8 square metres using a factor of 0.45 square metre/gram for the dry weight of negative active material and 2.5 square metres/gram for the dry weight of positive active material.

The dry electrolytically unformed cell was evacuated to a high vacuum and had 56 ml i.e. 0.76 (X+Y) to 0.73 (X+Y) of 1.28 SG aqueous sulphuric acid i.e. 27 grams of $H_2SO_4$ added to the unformed cell. The cell was then allowed to cool to 40°C (about 1 to 2 hours) and then electrolytically formed for 48 hours at 0.73 amps, i.e. $7C_5$ Ah, and subjected to three cycles of charging at 0.34 A for 14 hours and discharging at 0.38 for 10 hours, and was then charged for 60 hours at 0.2 A. About 13 cm³ of electrolyte was electrolysed off, the specific gravity of the electrolyte thus rising to about 1.30 to 1.31.

The amount of electrolyte remaining is thus 0.56 (X+Y) to 0.53 (X+Y).

The battery characteristics indicate that at a $C_{15}$ charging rate substantial oxygen gas recombination occurs and recombination still occurs at $C_{10}$.

The battery in the fully charged condition contained 0.53 grams of $H_2SO_4$ per gram of lead in the positive active material and 0.45 grams of $H_2SO_4$ per gram of lead in the negative active material. The electrolyte active material ratio was thus 0.49.

The battery had a capacity at 1.0 A of 5 Ah.

Gas recombination was demonstrated by subjecting the cell to 50 cycles of charging at 0.34 A for 14 hours (125% of capacity) and discharging at 0.38 A for 10 hours (80% of capacity). There was no detectable water loss. Even after 150 cycles the water loss was less than 0.5 ml i.e. less than 1%. On a Faradaic basis one would have expected the water loss to be $0.96 \times 150 \times 0.33$ i.e. 48 ml.

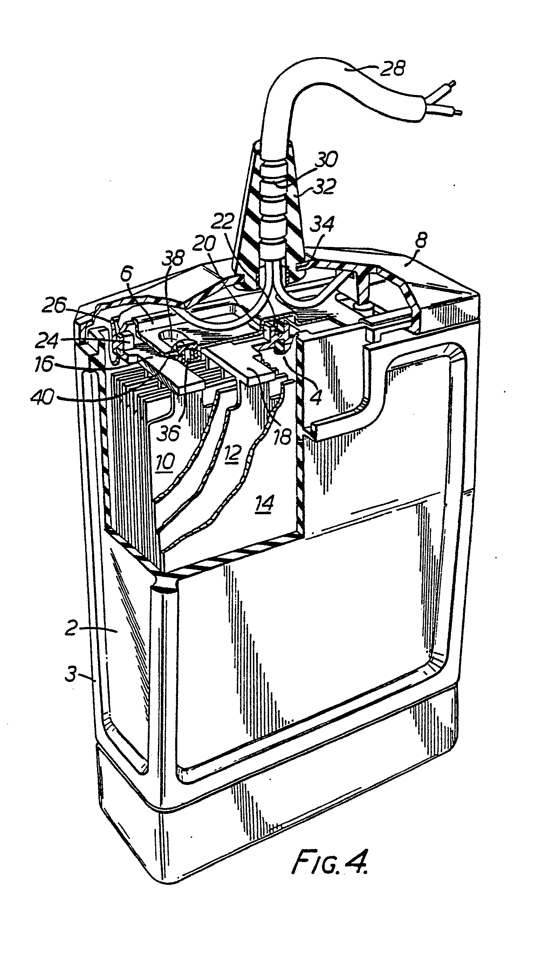

The positive and negative plates are interconnected by a respective positive and negative group bars 46 and 48. Integral with the negative group bar 48 is an upwardly projecting post 49 which is sealed into the lid 46 as shown in Figure 3. A tin plated brass terminal 47 is soldered to the top of post 49. The post passes up through a collar 70 in the lid in the inside edge of which is dished so that a rubber 'O' ring 71 can nest tightly in it, whereby as shown the post 49 compresses the ring 71 in use. A ring of hot melt adhesive 72 seals around the 'O' ring and between the inside face of the lid and the top of the group bar 48. A further ring of hot melt adhesive 73 seals around the post 49 at the top of the collar outside the lid.

Polypropylene packing sheets 75 are positioned between the ends of the electrode pack and the container to assist compression of the pack.

The cell or each cell of a battery is normally sealed, that is to say that during normal operation a cell does not communicate with the atmosphere. However in case a substantial over-pressure should build up in a cell, for instance because the cell is exposed to a very high temperature or overcharged, so that oxygen gas is evolved at a faster rate than it can be combined, a relief valve is provided to exhaust the excess gas. As can be seen in Figure 2 the valve is of the Bunsen type and comprises a passage 76 communicating with the interior of the cell and leading from inside the cell to atmosphere. The passage 76 is within a boss 77 in a collar 78 in the lid, and the boss is sealingly covered by a resilient cap 80 having a depending skirt around the boss. The cap 80 normally seals the passage 76, but if an excessive pressure should occur in the battery the skirt of the cap lifts away from the boss to vent the cell. A strip of adhesive tape (not shown) is secured over the cap 80 and the collar 78 thus ensuring that cap 80 is not blown off by the gas pressure.

Reference has been made above to cast lead alloy grids. Whilst this is preferred the electrodes could be made from slit expanded sheet or be of wrought form e.g. perforated or punched sheet.

Alternative antimonial alloys include those disclosed in the United States patents Nos. 3,879,217 and 3,912,537.

The electrolyte is added to each cell in a very limited quantity, that is to say much less is added than in the case of a conventional fully flooded cell. The electrolyte that is added is substantially all absorbed and retained by the separators and the active material and there is substantially no free electrolyte in the cell at least in the fully charged condition.

Thus, in use, the cell or each cell in a battery is normally sealed and is arranged so that essentially only oxygen is evolved on overcharge. Any such oxygen recombines with a negative plate. The cell generally operates at superatmospheric pressure at least on charge, and the relief valves are arranged to open only if the pressure becomes excessive, say when it reaches 1.1 bar i.e. 0.1 bar above atmosphere.

Example 2

This example of a cell embodying the invention is closely similar to Example 1 except that it has four instead of three positive plates and three instead of four negative plates. The cell has a capacity of 6 Ah and thus provides additional capacity compared to the cell of Example 1 but in the same overall cell volume.

The plate dimensions and grid weight, active material composition and density and weight per plate for the positive and negative plates are the same as in Example 1.

The separator composition, volume and weight are also the same as in Example 1.

The total geometric surface area of the positive plates in each cell is 292 square centimetres and of weight of active material of the positive plates is 74×1.07 i.e. 79.2 grams (as $PbO_2$ i.e. 68.6 grams as lead) and that of the negatives is 48×0.93 i.e. 44.6 grams (as lead) an excess of 66% positive active material based on the weight of the negative active material (54% as lead) or a ratio of negative to positive active material (on a lead weight basis) of 0.65:1. The total weight of the grids is 105 grams.

Despite the excess of positive active material in grams, gas recombination still occurs as indicated below. This is thought to be due to the greater electrochemical efficiency of the negative active material enabling oxygen gas generated on charging at the positive to be recombined at the negative sufficiently rapidly for negative active material to remain available to deal with additional oxygen as it is generated at the positive.

The true volume of the positive active material is 74÷9 i.e. 8.2 cm³ and its apparent volume is 74÷4.2 i.e. 17.6 cm³; the void volume of the positive active material is thus 9.4 cm³.

The true volume of the negative active material is 48÷10.5 i.e. 4.6 cm³ and its apparent volume is 48÷4.4. i.e. 10.9 cm³; the pore volume of the negative active material is thus 6.3 cm³. The total pore volume of the active material is 15.7 cm³ which is the value of Y. The ratio of X to Y is thus 3.9:1 to 4.1:1. (X+Y) is 66.7 to 70.7.

The calculated true surface area for the positive active material is 74×2.5 i.e. 185 square metres and for the negative is 48×0.45 i.e. 21.6 square metres using a factor of 0.45 square metre/gram for the dry weight of negative active material and 2.5 square metres/gram for the dry weight of positive active material.

The dry electrolytically unformed cell was evacuated to a high vacuum and had 56 ml i.e. 0.79 (X+Y) to 0.84 (X+Y) of 1.28 SG aqueous sulphuric acid i.e. 27 grams of $H_2SO_4$ added to the unformed cell. The cell was then formed as described for Example 1. The cell had a recombination performance as described for Example 1.

The battery in the fully charged condition contained 0.39 grams of $H_2SO_4$ per gram of lead in the positive active material and 0.61 grams of $H_2SO_4$ per gram of lead in the negative active material. The electrolyte active material ratio was thus 0.24.

Examples 3 and 4

Examples 1 and 2 were repeated except that the negative grids consisted of 0.08% by weight calcium and 0.8% by weight tin, balance substantially lead.

The recombination performance was as described for Example 1.

Example 5

The battery shown in Figure 4 has a rated capacity of 16 Ah and is designed for use as a miner's cap lamp battery. It has two cells accommodated in a container 2 made as a single moulding of polycarbonate plastics material and separated from one another by an integral inter-cell partition 4. The two cells are sealed by a common inner lid 6 which is connected to the walls of the container 2 and the partition 4 by the method known as "heat sealing" in which the edges to be joined are placed in contact with opposite surfaces of a heated tool which is subsequently withdrawn and the partially melted edges are pressed together. The battery is capped by a further outer lid 8 which is secured to the container and locked into position by means which form no part of the present invention.

Each cell contains three positive plates 10 interleaved with four negative plates 12 separated from one another by double layer separators 14 of electrolyte and gas permeable compressible blotting paper-like glas fibre material whose composition will be described below. Each negative plate is wrapped in a U-shaped sheet with the separator enclosing the bottom of the plate. A sheet of separator 14 is also wrapped right around the sides of the electrode pack. There are thus weight thicknesses of the double layer separator and one double layer wrapping in each cell. The positive plates 10 are 2.1 mm thick, 5.5 cm wide and 13 cm high and are formed from a cast grid of lead alloy and carry positive and negative active electrode material respectively. Each positive grid weighs 38 grams and each negative grid weighs 33 grams.

The grid alloy composition, positive active material composition, density and lead content and the negative active material composition, density and lead content are the same as in Example 1.

Each positive grid carries 50 grams of active material on a dry weight basis.

Each negative grid carries 45 grams of active material on a dry weight basis.

The separators 14 are the same highly absorbent blotting paper-like short staple fibre glass matting described for Example 1 but are about 1.2 mm thick, and are used as a double layer i.e. providing a total separator thickness between adjacent plates of 2.4 mm before assembly.

Each 1.2 mm sheet of separator 14 weighs 200 grams/square metre and has a porosity of 90—95% as measured by mercury intrusion penetrometry. The density of the glass from which the fibres of the separator are made is 2.69 g/cm$^3$; the weight to fibre density ratio is thus 100.

Each sheet of separator material is 0.12 cms thick, 6.1 cms wide and 14.1 cm high. Each sheet of the outer wrapping is 32 cm by 6.4 cm by 0.12 cm thick. The total volume of separator for each cell before assembly into the cell is thus 173.1 cubic centimetres. The separator in the cell is compressed by about 10% and thus the volume of the separator in the cell is 155.8 cubic centimetres. Since the porosity is 90—95% the void volume is 140 to 148 cm$^3$ (this is the value of X).

The weight of separator present in each cell is 31.6 grams.

The total geometric surface area of the positive plates in each cell is 429 square centimetres and of the negative plates 572 square centimetres. The dry weight of active material of the positive plates is 150×1.07 i.e. 160.5 grams (as PbO$_2$ i.e. 139 grams as lead) and that of the negatives is 180×0.93 i.e. 167.4 grams (as lead) an excess of 4.3% negative active material based on the weight of the positive active material (20% as lead) or a ratio of negative to positive active material (on a lead weight basis) of 1.20:1. The total weight of the grids is 246 grams.

The true volume of the positive active material is 160.5÷9 i.e. 17.8 cm$^3$ and its apparent volume is 160.5÷4.2 i.e. 38.2 cm$^3$; the void volume of the positive active material is thus 20.4 cm$^3$. The true volume of the negative active material is 167.4÷10.5 i.e. 15.9 cm$^3$ and its apparent volume is 167.4÷4.4 i.e. 38.0 cm$^3$; the pore volume of the negative active material is thus 22.1 cm$^3$. The total pore volume of the active material is 42.5 cm$^3$, which is the value of Y. The ratio of X to Y is thus 3.3:1 to 3.5:1. (X+Y) is 182.5 to 190.5.

The calculated true surface are for the positive active material is 160.5×2.5 i.e. 401.3 square metres and for the negative is 167.4×0.45 i.e. 75.3 square metres using a factor of 0.45 square metre/gram for the negative active material and 2.5 square metres/gram for the positive active material.

Each dry electrolytically unformed cell evacuated to a high vacuum and has 200 ml i.e. 1.10 (X+Y) to 1.05 (X+Y) of 1.27 SG aqueous sulphuric acid i.e. 91 grams of H$_2$SO$_4$ added to the unformed cell. The cell is then allowed to cool to 40°C (about 1 to 2 hours) and then electrolytically formed and about 30 cc of electrolyte is electrolysed off, the specific gravity of the electrolyte thus rising.

The electrolytic forming regime comprises 48 hours at 2.0 A, i.e. 5 C$_{20}$ Ah.

The amount of electrolyte remaining is thus 0.93 (X+Y) to 0.89 (X+Y).

The battery in the fully charged condition contains 0.61 grams of H$_2$SO$_4$ per gram of lead in the positive active material and 0.55 grams of H$_2$SO$_4$ per gram of lead in the negative active material. The electrolyte active material ratio was thus 0.29.

The battery had a capacity at 1.0 A of 15 Ah.

The positive and negative plates are interconnected by a respective positive and negative group bars 16 and 18. Integral with the negative group bar in the left hand cell as shown in Figure 4 is a laterally projecting portion which terminates in a "flag" or up-standing portion 20 which is adjacent to the intercell partition 4 and overlies a hole 22 in the partition. The positive flag in the left hand cell is connected to the similar negative flag in the right hand cell through the hole 22 so as to form an intercell connection.

The negative group bar in the left hand cell and the positive group bar in the right hand cell are also each provided with a flag 24 overlying a hole in the container 2. Each of the flags 24 is connected to a lug 26 outside the wall of the container 2 but within a space defined by the outer lid 8. The lugs 26 are connected to a respective connecting wire of a connecting lead 28 for connecting the battery to a miner's cap lamp.

Each cell is provided with a Bunsen type vent valve closely similar to that shown in Figure 2 and described for Example 1. Each valve comprises a passage 36 communicating with the interior of the cell and leading to the space between the internal and external lids 6 and 8. Each passage 36 is within a boss in a respective recess in the internal lid, and the boss is sealingly covered by a resilient cap 40 having a depending skirt around the boss. A downwardly extending projection 42 on the outer lid 8 engages each cap 40, thus ensuring that it is not blown off by the gas pressure.

Example 6

The battery in this example has the same structure as that described in Example 5 except that it has four positive plates and three negative plates. It has a rated capacity of 20 Ah. Each positive plate is wrapped in a U-shaped sheet of separator with the separator enclosing the bottom of the plate. A sheet of separator is also wrapped right around the sides of the electrode pack as in Example 5.

The plate dimensions and grid weight, active material composition and density and weight per plate for the positive and negative plates are the same as in Example 5.

The separator composition, volume and weight are also the same as in Example 5.

The total geometric surface area of the positive plates in each cell is 572 square centimetres and of the negative plates is 429 square centimetres. The dry weight of active material of the positive plates is $200 \times 1.07$ i.e. 214 grams (as $PbO_2$ i.e. 185 grams as lead) and that of the negatives is $135 \times 0.93$ i.e. 126 grams (as lead) an excess of 70% positive active material based on the weight of negative active material (47% as lead) or a ratio of negative to positive active material (on a lead weight basis) of 0.68:1. The total weight of the grids is 251 grams.

The true volume of the positive active material is $214 \div 9$ i.e. 23.8 cm³ and its apparent volume is $214 \div 4.2$ i.e. 50.9 cm³; the pore volume of the positive active material is thus 27.1 cm³.

The true volume of the negative active material is $126 \div 9$ i.e. 14 cm³ and its apparent volume is $126 \div 4.4$ i.e. 28.6 cm³; the pore volume of the negative active material is thus 14.6 cm³. The total pore volume of the active material is 43.7 cm³, which is the value of Y. The ratio of X to Y is thus 3.2:1 to 3.4:1. (X+Y) is 183.7 to 191.7.

The calculated true surface area for the positive active material is $214 \times 2.5$ i.e. 535 square metres and for the negative is $126 \times 0.45$ i.e. 56.7 square metres.

Each dry electrolytically unformed cell was evacuated to a high vacuum and had 200 ml i.e. 1.09 (X+Y) to 1.04 (X+Y) of 1.27 SG aqueous sulphuric acid i.e. 91 grams of $H_2SO_4$ added to the unformed cell. The cells were then formed as described for Example 5.

The battery in the fully charged condition contains 0.46 grams of $H_2SO_4$ per gram of lead in the positive active material and 0.72 grams of $H_2SO_4$ per gram of lead in the negative active material. The electrolyte active material ratio was thus 0.28 to 1.

Examples 7 and 8

These have the same structures and compositions as the batteries of Examples 5 and 6 except that the negative grids consisted of 0.08% by weight calcium and 0.8% by weight tin, balance substantially lead.

Example 9

The cell in this example has a rated capacity of 25 Ah at 25 A i.e. the 1 h rate and is designed for use in an aircraft battery. The cell is accommodated in a container made as a single moulding of a polystyrene plastics material. The cell is sealed by a lid which is connected to the walls of the container by cementing with an appropriate conventional cement. The cell is provided with a vent as described for Example 1 and the terminal posts are sealed into the end walls of the container as is conventional for flooded aircraft batteries. The cell contains six positive plates interleaved with seven negative plates separated from one another by separators of the same material used in Example 5. Each negative is wrapped in a single U shaped layer of the 1.2 mm thick material (which weighs 200 gr/square metre) with the separator enclosing the bottom of the plate.

The positive plates are 0.15 cm thick, 8.25 cm wide and 14.5 cm high, the negative plates are 0.13 cm thick, 8.25 cm wide and 14.8 cm wide. They are formed from a cast grid of lead alloy and carry positive and negative active electrode material respectively. Each positive grid weighs 43 grams and each negative grid weighs 37 grams.

The grid alloy composition is 6% by weight antimony, balance substantially lead.

The positive active material had the following composition, before being electrolytically formed: grey oxide 1080 parts, fibre 0.45 parts, water 140 parts, 1.400 SG aqueous sulphuric acid 76 parts. The paste had a density of 4.1 g/cm³.

The negative active material had the following composition, before being electrolytically formed: grey oxide 1080 parts, fibre 0.225 parts, barium sulphate 5.4 parts, carbon black 1.8 parts, stearic acid 0.56 parts, Vanisperse CB (a lignosulphonate) 2.25 parts, water 126 parts, 1.40 SG aqueous sulphuric acid 66 parts. The paste had a density of 4.35 g/cm³.

Each positive grid carried 55 grams of active material on a dry weight basis (65 grams of wet paste).

Each negative grid carried 49.5 grams of active material on a dry weight basis (62 grams of wet paste).

The plates were dry charged before assembly into the cell by immersion as pairs of positives alternating with pairs of negatives, the pairs being spaced apart by 1 cm, in a tank of aqueous sulphuric acid having an SG of 1.010 (measured at 15°C) for 20 hours at 1.39 A per plate.

Each sheet of separator material is 0.12 cms thick 8.8 cms wide and 31.3 cm long. The total volume of separator in the cell before assembly is thus

$$7 \times 0.12 \times 8.8 \times 31.3$$

i.e. 231 cm³. The separator in the cell is compressed by 5% and thus the volume of the separator in the cell is 219.4 cm³. Since the porosity of the separator is 90—95% the separator pore volume is 197.5 to 208 cm³ (this is the value of X).

The total geometric surface area of the positive plates in the cell is 1435.5 square centimetres and of the negative plates is 1709.4 square centimetres. The dry weight of the active material of the positive plates is $55 \times 6 \times 0.83$ i.e. 274 grams (as $PbO_2$ i.e. 237 grams as lead) and that of the negatives is $49.5 \times 7 \times 1.00$ i.e. 346.5 grams (as lead) an excess of 26% of negative active material based on the weight of positive active material (46% as lead) or a ratio of negative to positive active material (on a weight of lead basis) of 1.46:1. The total weight of the grids is 517 grams.

The true volume of the positive active material is $274 \div 9$ i.e. 30.4 cm³ and its apparent volume is $274 \div 4.2$ i.e. 65.2 cm³; the pore volume of the positive active material is thus 34.8 cm³.

The true volume of the negative active material is $346.5 \div 10.5$ i.e. 32.4 cm³ and its apparent volume is $346.5 \div 4.4$ i.e. 78.8 cm³; the pore volume of the negative active material is thus 46.4 cm³. The total pore volume of the active material is thus 81.2 cm³, which is the value of Y. The ratio of X to Y is thus 2.9:1 to 2.6:1. (X+Y) is 278.7 to 289.2.

The calculated true surface area for the positive active material is $274 \times 2.5$ i.e. 685 square metres and for the negatives is $346.5 \times 0.45$ i.e. 156 square metres.

Each dry charged cell was evacuated to a high vacuum and had 300 ml i.e. 1.08 (X+Y) to 1.09 (X+Y) of 1.30 SG aqueous sulphuric acid i.e. 156 grams of $H_2SO_4$ added to it.

The cell was then discharged to 1.667 volt and if the discharge time was in excess of 55 minutes it was used. If it was less the cell was recharged at 2 A for 16 hours (i.e. 25 Ah or 125% of the cells capacity) and then discharged at 1.5 A to 1.667 volts once or twice after which time the discharge time had risen to 60 minutes in almost all cases.

Despite the amount of electrolyte seeming by calculation to exceed the pore volume of the system in the fully charged state recombination still occurred as can be seen from the performance in the following tests.

The cell was recharged at 2 A for 16 hours and then subjected to 25 cycles of discharge at 6 A across a 0.33 ohm resistance (80% depth of discharge) and then recharged at 4 A for 8 hours. After this the cell had lost 2.9 cm³ of water. The cell was then taken at top of charge and discharged at 25 A (1 h rate) to 1.667 volt (i.e. 100% depth of discharge). The discharge duration was in excess of 48 minutes.

The cell was then given 30 more cycles as in the first 25 cycles after which it had lost a further 1.7 ccs of water. On a Faradaic basis one would have expected the cell to have lost 110 ml over this period.

The cell survived this regime, with discharge at 79 and 104 cycles at which the further water losses were 1.5 and 1.1 cm³ respectively, to in excess of 125 cycles.

Example 10

Example 9 was repeated except that the grids were made from the alloy described for Example 1.

The cell was subjected to the same test regime as the cell of Example 9 and the water loss after 28 cycles was 1.7 cm³, after 54 cycles was 1.4 cm³ after 84 cycles was 1.0 ccs and after 112 cycles was 0.9 cm³, the cell surviving in excess of 125 cycles.

Testing of the cells of Examples 9 and 10 on constant potential recharging at 2.37 volt also indicated good cycle lifes with even lower water losses than those quoted for the constant current recharging regime described above.

Example 11

The battery has a capacity of 24 Ah and has six cells accommodated in a container made as a single moulding of polypropylene plastics material and separated from each other by integral intercell partitions. The cells are sealed by a common lid, provided with a vent as described for Example 1, which is connected to the walls of the container and partitions by the method known as "heat sealing" in which the edges to be joined are placed in contact with opposite surfaces of a heated tool which is subsequently withdrawn and the partially melted edges are pressed together. Intercell connectors and terminal posts are provided in conventional manner as for a flooded automotive battery.

Each cell contains three positive plates interleaved with four negative plates separated from one another by separators of electrolyte and gas permeable compressible blotting paper-like glass fibre material whose composition and function will be described below. A sheet of separator is also placed on both outside faces of each cell. Each positive is wrapped in a sheet 23 cm by 16 cm by 1.2 mm thick weighing 200 grams/square metre with the separator enclosing the bottom of the plate. A single sheet of separator 0.6 mms thick by 11.5 cm high by 16 cm wide weighing 100 grams/square metre is placed against the outside face of the two end negative plates. The positive plates are formed from a cast grid of the antimonial alloy of Example 1 and the negative plates are formed from a cast grid of lead alloy containing 0.07% calcium and 0.7% tin and carry positive and negative active electrode material respectively.

The positive and negative plates are 1.27 mm thick 15.0 cm wide and 10.7 cm high and are held in intimate contact with the separators by solid polypropylene packing pieces. Both faces of all plates are covered by separator material which extends out above and below and on each side of the plates.

More broadly the plates may be 1 to 2 mm thick e.g. 1.2 to 1.9 or 1.2 to 1.6 mm thick. In another alternative the positive is 1.4 mm thick and the negative is 1.2 mm thick.

The positive and negative active material compositions, densities and lead contents are as described in Example 1.

Each positive grid carried 75 grams of active material and each negative 74 grams, both on a dry weight basis.

The separators are as described in connection with Example 1.

The interplate separators weighed 200 and the end separators 100 grams/square metre respectively and have a porosity of 90—95% as measured by mercury intrusion penetrometry. The density of the glass from which the fibres of the separator are made is 2.69 $g/cm^3$; the weight to fibre density ratio is thus 74.

Each sheet of the three sheets of interplate separator material is 1.2 mm thick by 23 cm by 16 cm. Each of the two sheets of end separator is 0.6 mm thick by 11.5 cm by 16.0 cm. The total volume of separator for each cell before assembly is 154.6 cubic centimetres. The separator in the cell is compressed by 10% and thus the volume of the separator in the cell is 139.1 cubic centimetres. Since the porosity is 90—95% the separator void volume is 125 to 132 ccs (this is the value of X). The weight of the separator present in each cell is 25.8 grams.

The total geometric surface area of the positive plates in each cell is 8×15×10.7 i.e. 963 square centimetres and of the negatives plates 8×15×10.7 i.e. 1284 square centimetres. The dry weight of active material of the positive

plates is 75×3×1.07 i.e. 240.8 grams (as $PbO_2$ i.e. 208 grams as lead) and that of the negatives is 74×4×0.93 i.e. 275.3 grams (as lead) an excess of 14% negative active material based on the weight of the positive active material (32% as lead) or a ratio of negative to positive active material (on a lead weight basis) of 1.32:1.

The true volume of the positive active material is 240.8÷9 i.e. 26.8 $cm^3$ and its apparent volume is 240.8÷4.2 i.e. 57.3 $cm^3$; the void volume of the positive active material is thus 30.5 $cm^3$.

The true volume of the negative active material is 275.3÷10.5 i.e. 26.2 $cm^3$ and its apparent volume is 275.3÷4.4 i.e. 62.6 $cm^3$; the void volume of the negative active material is thus 36.4 $cm^3$. The total void volume of the active material is 66.9 $cm^3$ which is the value of Y. The ratio of X to Y is thus 1.9:1 to 2.0:1. (X+Y) is 191.9 to 198.9 $cm^3$.

The calculated true surface area for the positive active material is 240.8×2.5 i.e. 602 square metres and for the negative is 275.3×0.45 i.e. 124 square metres, using a factor of 0.45 square metre/gram for the negative active material and 2.5 square metres/gram for the positive active material.

Each dry electrolytically unformed cell was evacuated to a high vacuum and had 240 ml of cold (5°C) 1.270 SG aqueous sulphuric acid i.e. 1.21 (X+Y) to 1.25 (X+Y) i.e. 109 grams of $H_2SO_4$ added to the unformed cell. The cells were electrolytically formed within 2 hours of filling and 20 $cm^3$ of electrolyte was electrolysed off, the specific gravity of the electrolyte rising to 1.310.

The electrolytic forming regime comprised 72 hours at 1.67 amps i.e. 5 $C_{20}$ Ah; the $C_{20}$ capacity being 24 Ah.

The amount of electrolyte remaining is thus 1.15 (X+Y) to 1.11 (X+Y) and would thus appear by calculation to exceed the pore volume of the system in the fully charged state.

However the battery characteristics indicate that at a $C_{15}$ charging rate substantial oxygen gas recombination occurs and recombination still occurs at $C_{10}$.

Example 12

Example 11 was repeated except that the negative grids were made of the same antimonial alloy as the positive grid.

Example 13

Example 11 was repeated except that the positive grid was made of an alloy of 6% by weight antimony, balance substantially lead.

Example 14

Example 13 was repeated except that the negative grids were made of the same 6% antimonial alloy as the positive grids.

Continuous overcharge tests at 2 Amps for 193 hours indicated that the batteries of Examples 11, 12, 13 and 14 were all achieving a high level of gas recombination in the light of the water loss incurred, which was less than 5 ml per cell.

On a Faradaic basis one would have expected the water loss to be 386×0.33 i.e. 127 ml per cell.

Industrial applicability

The invention is applicable to recombinant lead acid electric storage batteries and cells.

Australian Patent 407845 discloses a battery in which the current conducting elements or grids of the electrodes are antimonial alloys plated with pure lead. We make no claim to batteries having such grids.

**Claims**

1. A recombinant lead acid electric storage battery in which the electrodes in each cell have current conducting elements made from lead alloy, the positive and negative electrodes being arranged so that the capacity of the negative electrodes is at least as great as the capacity of the positive electrodes, the positive and negative electrodes being separated by separators of electrolyte and gas permeable electrolyte absorbent compressible fibrous material, the said separators being compressed between the said electrodes and the battery containing aqueous sulphuric acid electrolyte absorbed in the electrodes and in the separator material, the battery at least when fully charged having substantially no free unabsorbed electrolyte, each cell being in communication with non-return gas venting means, the arrangement being such that sufficient oxygen gas recombination occurs in the battery at charging rates not in excess of $C_{20}$ to achieve recombinant operation of the battery, characterised in that the current conducting elements of at least one of the electrode groups are made from an antimonial lead alloy containing from 1.0% to 6% antimony.

2. A recombinant lead acid electric storage battery as claimed in Claim 1 in which the compressible fibrous separator material comprises fibres having diameters ranging from 0.01 $\mu$m or less up to 10 $\mu$m with an average diameter of less than 5 $\mu$m, the compressible fibrous separator material has a weight to fibre density ratio of at least 20 and the separator material has an electrolyte absorption ratio of at least 100%, when separately tested, the electrolyte absorption ratio being the ratio, as a percentage, of the volume of electrolyte absorbed by the wetted portion of the separator material to the dry volume of that portion of the separator material which is wetted, when a strip of the dry separator material is suspended vertically above a body of aqueous sulphuric acid electrolyte of 1.270 SG containing 0.01% by weight sodium lauryl sulphonate with 1 cm of the lower end of the strip immersed in the electrolyte after a steady state wicking condition has been reached at 20°C at a relative humidity of less than 50%.

3. A battery as claimed in Claim 1 or Claim 2 in which the antimonial alloy electrodes contain from 1.01% to 2.99% of antimony.

4. A battery as claimed in Claim 1, 2 or 3 in which each positive electrode has current conducting elements made from an antimonial alloy containing 1% to 4% by weight antimony and each negative electrode has current conducting elements made from lead, a lead-calcium alloy containing up to 0.13% by weight calcium or a lead-tin-calcium alloy containing up to 0.13% by weight calcium and up to 1.0% by weight tin.

5. A battery as claimed in Claim 1, 2, 3 or 4 in which each antimonial electrode has current conducting elements made from an antimonial lead alloy consisting of 2.3 to 2.8% by weight antimony, 0.25% to 0.35% by weight arsenic, 0.10 to 0.14% by weight tin, 0.02 to 0.05% by weight copper, 0.002% to 0.05% selenium, balance substantially lead.

6. A battery as claimed in any one of Claims 1 to 5 in which each negative electrode has current conducting elements made from a lead-calcium alloy containing 0.03 to 0.10% by weight calcium, balance lead.

7. A battery as claimed in any one of Claims 1 to 5 in which each negative electrode has current conducting elements made from a lead-calcium-tin alloy containing 0.03 to 0.1% by weight calcium and 0.4 to 0.99% by weight tin, balance lead.

8. A battery as claimed in any one of Claims 1 to 7 in which the volume (E) of electrolyte in the battery after formation is at least 0.8 (X+Y), where (X) is the total pore volume of the separators in the dry state and (Y) is the total pore volume of the active electrode material in the dry fully charged state.

**Revendications**

1. Une batterie d'accumulateurs électriques acides au plomb dans laquelle les électrodes de chaque élément comportent des éléments conducteurs de courant fabriqués en alliage de plomb, les électrodes positives et négatives étant agencées de façon que la capacité des électrodes négatives soit au moins aussi grande que la capacité des électrodes positives, les électrodes positives et négatives étant séparées par des séparateurs en une matière fibreuse compressible absorbant l'électrolyte et perméable à l'électrolyte et aux gaz, lesdits séparateurs étant comprimés entre lesdites électrodes, et la batterie contenant un électrolyte à base d'acide sulfurique en solution aqueuse absorbé, la batterie au moins lorsqu'elle est complètement chargée, ne comportant pratiquement aucun électrolyte libre non absorbé, chaque élément étant en communication avec des moyens d'évacuation des gaz anti-retour, l'agencement étant tel qu'il se produit une recombinaison suffisante de l'oxygène gazeux dans la batterie à des régimes de charge qui ne dépassent pas $C_{20}$ pour obtenir un fonctionnement à recombinaison de la batterie, caractérisée en ce que les éléments conducteurs de courant de l'un au moins des groupes d'électrodes sont fabriqués dans un alliage de plomb antimonié contenant entre 1,0% et 6% d'antimine.

2. Une batterie d'accumulateurs électriques acides au plomb à recombinaison telle que revendiquée dans la revendication 1, dans laquelle la matière de séparateur fibreuse compressible comprend des fibres ayant des diamètres compris entre 0,01 $\mu$m ou moins jusqu'à 10 $\mu$m avec un diamètre moyen inférieur à 5 $\mu$m, la matière de séparateur fibreuse compressible a un rapport du poids à la densité des fibres d'au moins 20 et la matière de séparateur a un rapport d'absorption d'électrolyte d'au moins 100%, lorsqu'elle est assayée séparément, le rapport d'absorption d'électrolyte étant le rapport, en pourcentage, du volume d'électrolyte absorbé par la partie mouillée de la matière de séparateur au volume à sec de cette partie de la matière de séparateur qui est mouillée, lorsqu'une bande de la matière de séparateur sèche est suspendue verticalement au-dessus d'une masse d'électrolyte à base d'acide sulfurique en solution aquese de densité 1,270 contenant 0,01% en poids de sodium lauryl sulfonate avec 1 cm de l'extrémité inférieure de la bande immergé dans l'électrolyte après qu'une condition stable de migration par effet de mèche a été atteinte à 20°C à une humidité relative inférieure à 50%.

3. Une batterie telle que revendiquée dans la revendication 1 ou la revendication 2, dans laquelle les électrodes en alliage antimonié contiennent entre 1,01% et 2,99% d'antimoine.

4. Une batterie telle que revendiquée dans la revendication 1, 2 ou 3, dans laquelle chaque électrode positive comporte des éléments conducteurs de courant fabriqués en un alliage antimonié contenant entre 1% et 4% en poids d'antimoine et chaque électrode négative comporte des éléments conducteurs de courant fabriqués en plomb, en alliage de plomb-calcium contenant jusqu'à 0,13% en poids de calcium ou en alliage de plomb-étain-calcium contenant jusqu'à 0,13% en poids de calcium et jusqu'à 1,0% en poids d'étain.

5. Une batterie telle que revendiqué dans la revendication 1, 2, 3 ou 4, dans laquelle chaque électrode antimoniée comporte des éléments conducteurs de courant fabriqués dans un alliage de plomb antimonié comprenant entre 2, 3 et 2,8% en poids d'antimoine, entre 0,25 et 0,35% en poids d'arsenic, entre 0,10 et 0,14% en poids d'étain, entre 0,02 et 0,05% de cuivre, entre 0,002 et 0,05% en poids de sélénium, le reste étant essentiellement du plomb.

6. Un batterie telle que revendiquée dans l'une quelconque des revendications 1 à 5, dans laquelle chaque électrode négative comporte des éléments conducteurs de courant fabriqués dans un alliage de plomb-calcium contenant entre 0,03 et 0,10% en poids de calcium, le reste étant du plomb.

7. Une batterie telle que revendiquée dans l'une quelconque des revendications 1 à 5, dans laquelle chaque électrode négative comporte des éléments conducteurs de courant fabriqués dans un alliage de plomb-calcium-étain contenant entre 0,03 et 0,1% en poids de calcium et entre 0,4 et 0,99% en poids d'étain, le reste étant du plomb.

8. Une batterie telle que revendiquée dans l'une quelconque des revendications 1 à 7, dans laquelle le volume (E) d'électrolyte de la batterie après formation est d'au moins 0,8 (X+Y), formule dans laquelle (X) est le volume total des pores des séparateurs à l'état à sec et (Y) est le volume total des pores de la matière d'électrode active à l'état complètement chargé, à sec.

**Patentansprüche**

1. Rekombinierende elektrische Speicherbleibatterie, in welcher die Elektroden in jeder Zelle stromleitende Elemente aus einer Bleilegierung aufweisen, wobei die positiven und negativen Elektroden so angeordnet sind, daß die Kapazität der negativen Elektroden wenigstens so groß wie die Kapazität der positiven Elektroden ist, wobei die positiven und negativen Elektroden durch Elektrolyt-Separatoren und gasdurchlässiges, Elektrolyt absorbierendes komprimierbares faserartiges Material getrennt sind, wobei die Separatoren zwischen den Elektroden zusammengedrückt sind, die Batterie einen wäßrigen Schwefelsäure-Elektrolyt enthält, der in den Elektroden und in dem Separatormaterial absorbiert ist, die Batterie wenigstens in voll aufgeladenen Zustand im wesentlichen keinen freien, nichtabsorbierten Elektrolyt aufweist und jede Zelle in Verbindung mit einer nicht umkehrbaren Gasabzugsvorrichtung ist, wobei die Anordnung derart getroffen ist, daß eine ausreichende Sauerstoffgas-Rekombination in der Batterie bei Stromaufnahmen von nicht mehr als $C_{20}$ eintritt, um einen Rekombinationsbetrieb der Batterie zu erreichen, dadurch gekennzeichnet, daß die stromleitenden Elemente wenigstens einer der Elektrodengruppe aus einer antimonhaltigen Bleilegierung gebildet sind, welche von 1,0% bis 6% Antimon enthält.

2. Batterie nach Anspruch 1, dadurch gekennzeichnet, daß das komprimierbare faserförmige Separator-Material Fasern umfaßt, welche Durchmesser im Bereich von 0,01 oder darunter bis zu 10 $\mu$m aufweisen, wobei ein mittlerer Durchmesser von weniger als 5 $\mu$m vorhanden ist, daß das Komprimierbare faserartige Separator-Material ein Gewicht-Faserdichte-Verhältnis von wenigstens 20 und das Separator-Material ein Elektrolyt-Absorptions-Verhältnis von wenigstens 100% aufweist, wenn es separat untersucht wird, wobei das Elektrolyt-Absorptions-Verhältnis das in Prozent ausgedrückte Verhältnis des Elektrolyt-Volumens, das von dem benetzten Teil des Separator-Materiales absorbiert ist, zu dem Trockenvolumen dieses Teiles des Separator-Materials ist, welches benetzt ist, wenn ein Streifen des trockenen Separator-Materials vertikal oberhalb eines Körpers aus wäßrigem Schwefelsäure-Elektrolyt mit spezifischem Gewicht von 1,270 (SG) aufgehängt ist, welcher 0,01 Gew.-% Natriumlaurylsulfonat enthält, wobei 1 cm des unteren Endes des Streifens in den Elektrolyt eingetaucht ist, nachdem ein beständiger Dochtzustand bei 20°C und einer relativen Feuchtigkeit von weniger als 50% erreicht ist.

3. Batterie nach Anspruch 1 oder 2, dadurch gekennzeichnet, daß die Elektroden aus antimonhaltiger Legierung von 1,01% bis 2,99% Antimon enthalten.

4. Batterie nach einem der Ansprüche 1, 2 oder 3, dadurch gekennzeichnet, daß jede positive Elektrode stromleitende Element aufweist, die aus einer antimonhaltigen Legierung bestehen, welche von 1 bis 4 Gew.-% Antimon enthält, und daß jede negative Elektrode stromleitende Elemente aufweist, die aus Blei, einer bis zu 0,13 Gew.-% Calcium enthaltenden Blei-Calciumlegierung oder aus einer Blei-Zinn-Calciumlegierung hergestellt sind, welche bis zu 0,13 Gew.-% Calcium und bis zu 1,0 Gew.-% Zinn enthält.

5. Batterie nach Anspruch 1, 2, 3 oder 4, dadurch gekennzeichnet, daß jede antimonhaltige Elektrode stromleitende Elemente aufweist, die aus einer antimonhaltigen Bleilegierung hergestellt sind, welche aus 2,3 bis 2,8 Gew.-% Antimon, 0,25 bis 0,35 Gew.-% Arsen, 0,10 bis 0,14 Gew-% Zinn, 0,02 bis 0,05 Gew.-% Kupfer, 0,002 bis 0,05% Selen, Rest im wesentlichen Blei, besteht.

6. Batterie nach einem der Ansprüche 1 bis 5, dadurch gekennzeichnet, daß jede negative Elektrode stromleitende Elemente aufweist, die aus einer Blei-Calcium-Legierung bestehen, welche 0,03 bis 0,10 Gew.-% Calcium, Rest Blei, enthält.

7. Batterie nach einem der Ansprüche 1 bis 5, dadurch gekennzeichnet, daß jede negative Elektrode stromleitende Elemente aufweist, die aus einer Blei-Calcium-Zinn-Legierung hergestellt sind, welche 0,03 bis 0,1 Gew.-% Calcium und 0,4 bis 0,99 Gew.-% Zinn, Rest Blei, enthält.

8. Batterie nach einem der Ansprüche 1 bis 7, dadurch gekennzeichnet, daß das Volumen (E) des Elektrolyten in der Batterie nach der Ausbildung wenigstens 0,8 (X+Y) beträgt, wobei (X) das Gesamtporenvolumen der Separatoren in dem Trockenzustand und (Y) das Gesamtporenvolumen des aktiven Elektroden-Materials in dem Trockenen, vollständig geladenen Zustand ist.

*FIG. 1.*

*FIG. 2.*

*FIG. 3.*

1

FIG.4.

FIG. 5.

1000×

⌐ 10 MICRONS

FIG. 6.

4000×

⌐ 2·5 MICRONS